(19) Europäisches Patentamt / European Patent Office / Office européen des brevets

(11) **EP 4 113 160 B1**

(12) **EUROPEAN PATENT SPECIFICATION**

(45) Date of publication and mention
of the grant of the patent:
**24.06.2026  Bulletin 2026/26**

(21) Application number: **21218392.5**

(22) Date of filing: **30.12.2021**

(51) International Patent Classification (IPC):
**G01S 7/481** *(2006.01)*      **G01S 17/894** *(2020.01)*

(52) Cooperative Patent Classification (CPC):
**G01S 7/4814; G01S 17/894**

(54) **LASER EMISSION MODULE, DEPTH CAMERA AND ELECTRONIC DEVICE**

LASEREMISSIONSMODUL, TIEFENKAMERA UND ELEKTRONISCHE VORRICHTUNG

MODULE D'ÉMISSION LASER, CAMÉRA DE PROFONDEUR ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **29.06.2021  CN 202110729833**

(43) Date of publication of application:
**04.01.2023  Bulletin 2023/01**

(73) Proprietor: **Beijing Xiaomi Mobile Software Co., Ltd.**
**Beijing 100085 (CN)**

(72) Inventor: **LI, Hui**
**Beijing (CN)**

(74) Representative: **Dehns Germany Partnerschaft mbB**
**Theresienstraße 6-8**
**80333 München (DE)**

(56) References cited:
**WO-A1-2020/071885      US-A1- 2020 003 870**
**US-A1- 2021 041 691**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

The present disclosure relates to the field of electronic technology, and in particular, to a laser emission module, a depth camera, and an electronic device.

## BACKGROUND

Depth cameras are 3D cameras, which are capable of detecting the depth of field distance of the shooting space.

In the related art, the depth camera mainly includes a laser emission module and a laser receiver module. The laser emission module is used to emit a laser beam to a target object, and the laser receiver module is used to receive the reflected laser beam. In order to increase the field of view of the emitted laser beam, it is necessary to increase the optical power of the laser beam, i.e., to increase the electric power of the laser emission module. Related technologies are known from patent publication documents US 2021/041691 A1, WO 2020/071885 A1 and US 2020/003870 A1.

## SUMMARY

The invention is defined by the independent claims. In order to solve the above technical problems, the purpose of the present disclosure is to provide a laser emission module, a depth camera, and an electronic device to increase the field of view of the emitted laser beam.

In order to achieve above, the technical solutions adopted by the present disclosure are as follows.

According to one aspect of the present disclosure, a laser emission module is provided, including an emission assembly and a phased array assembly.

The emission assembly has a light outlet, and the light outlet is configured to emit a laser beam.

The phased array assembly is located at the light outlet and is configured to change a direction of the laser beam emitted from the light outlet.

In one embodiment of the present disclosure, the phased array assembly includes a circuit board component, a transparent substrate and more than one phase adjustment unit.

The circuit board component is located outside the light outlet and is connected to the emission assembly.

The transparent substrate is located at the light outlet and is perpendicular to the laser beam emitted from the light outlet.

The more than one phase adjustment unit is located on a side, away from the light outlet, of the transparent substrate and is arranged in an array. An orthographic projection of the array formed by the more than one phase adjustment unit on a plane where the light outlet is located, at least partially, overlaps with the light outlet.

In another embodiment of the present disclosure, a material of the more than one phase adjustment unit has an electro-optical effect and/or a thermo-optical effect.

In yet another embodiment of the present disclosure, the more than one phase adjustment unit is a liquid crystal cell or an optical waveguide unit.

In yet another embodiment of the present disclosure, the circuit board component includes a first circuit board and a second circuit board.

The first circuit board is sandwiched between the transparent substrate and the light outlet, a middle part of the first circuit board has a light transmission hole, and the light transmission hole is opposite to the light outlet.

One end of the second circuit board is connected to the first circuit board, and the other end of the second circuit board is connected to the emission assembly.

The emission assembly includes a third circuit board, a frame and a laser chip.

One end of the frame is connected to a surface of the third circuit board, and the other end of the frame has the light outlet.

The laser chip is located in the frame and is connected to the surface of the third circuit board.

The emission assembly further includes a collimating lens.

The collimating lens is located between the light outlet and the laser chip and is connected to an inner wall of the frame.

In yet another embodiment of the present disclosure, when multiple laser beams are emitted from the light outlet, the multiple laser beams satisfy following conditions: frequencies of the multiple laser beams are identical; vibration components of the multiple laser beams are parallel to each other; and phase difference between any adjacent laser beams in the multiple laser beams is constant.

In yet another embodiment of the present disclosure, when multiple laser beams are emitted from the light outlet, an equiphase surface is formed by wavefronts of the multiple laser beams, and the multiple laser beams passing through the equiphase surface are perpendicular to the equiphase surface.

According to another aspect of the present disclosure, there is provided a depth camera including a laser emission module and a laser receiver module.

The laser emission module is the aforementioned laser emission module.

The laser receiver module is arranged side by side with the laser emission module.

In one embodiment of the present disclosure, the laser receiver module includes a fourth circuit board, a holder and a sensor chip.

The holder is connected to a surface of the fourth circuit board and is provided with a light inlet, and the light inlet is located at a side, facing away from the fourth circuit board, of the holder.

The sensor chip is located inside the holder, connected to the surface of the fourth circuit board, and opposite to the light inlet.

In another embodiment of the present disclosure, the laser receiver module further comprises a receiving lens and a narrow-band filter.

The receiving lens is located at the light inlet and is connected to the holder.

The narrow-band filter is located at the light inlet and is sandwiched between the receiving lens and the holder.

In yet another embodiment of the present disclosure, the depth camera further comprises a reinforcement plate.

The laser emission module and the laser receiver module are connected to a same surface of the reinforcement plate.

In yet another embodiment of the present disclosure, the laser emission module and the laser receiver module are extended with a first flexible circuit board and a second flexible circuit board, respectively, to connect connectors of the depth camera, and the connectors are configured to connect components within the depth camera; preferably, the first flexible circuit board extended from the laser emission module and the second flexible circuit board extended from the laser receiver module are located on a same side.

According to another aspect of the present disclosure, there is provided an electronic device including a housing and a depth camera.

The depth camera is the aforementioned depth camera, and the depth camera is located in the housing.

The technical solutions provided by the embodiments of the present disclosure lead to at least following beneficial effects.

When a laser beam is emitted by the laser emission module provided by the embodiments of the present disclosure, the laser beam is emitted from the light outlet of the emission assembly and passes through the phased array assembly. As the laser beam passes through the phased array assembly, the irradiation direction of the laser beam can be adjusted by the phased array assembly because the phased array assembly can change its refractive index through an electro-optical effect or a thermo-optical effect, thereby changing the deflection angle of the laser beam, which is equivalent to achieving scanning of the laser beam within a certain angle, i.e., increasing the field of view of the laser beam.

In addition, since the laser emission module provided by the embodiments of the present disclosure does not increase the optical power of the laser beam during the process of increasing the field of view of the laser beam, the electric power of the laser emission module is not increase either, there is no problem of overheating and the laser emission module can work for a long time.

**BRIEF DESCRIPTION OF THE DRAWINGS**

In order to clarify the technical solutions in the embodiments of the present disclosure, the accompanying drawings used for illustrating the embodiments will be briefly described below. Obviously, the accompanying drawings in the following description show only some of the embodiments of the present disclosure, and other drawings may be obtained by a person of ordinary skill in the art without departing from the drawings described herein.

FIG. 1 illustrates a structural schematic diagram of a depth camera provided by embodiments of the present disclosure.

FIG. 2 illustrates a structural schematic diagram of a laser emission module provided by embodiments of the present disclosure;

FIG. 3 illustrates a cross-sectional view in the A-A direction of the laser emission module in FIG. 2 as provided in the embodiments of the present disclosure.

FIG. 4 illustrates a schematic diagram of optical paths of laser beams provided by embodiments of the present disclosure.

FIG. 5 illustrates a cross-sectional view in the B-B direction of the depth camera in FIG. 1 as provided in the embodiments of the present disclosure.

FIG. 6 illustrates a structural schematic diagram of an electronic device provided by embodiments of the present disclosure.

## DETAILED DESCRIPTION

In order to clarify the purpose, technical solutions and advantages of the present disclosure, embodiments of the present disclosure will be described in further detail below in conjunction with the accompanying drawings.

Depth cameras are 3D cameras, which are capable of detecting the depth of field distance of the shooting space.

In related art, depth cameras mainly include the following three types, which are structured light depth cameras, binocular stereo vision depth cameras and optical time of flight depth cameras.

Among them, the optical time of flight depth camera refers to TOF camera, which mainly includes a laser emission module and a laser receiver module. The laser emission module is used to emit a laser beam to the target object, and the laser receiver module is used to receive the reflected laser beam. The depth of field distance of the camera from the target object is calculated by the time difference between the emitted laser beam and the received laser beam. In order for the laser beam to irradiate more target objects, it is necessary to increase the field of view of the emitted laser beam. In this way, it is necessary to increase the optical power of the laser beam, i.e., the electric power of the laser emission module needs to be increased.

However, as the electric power of the laser emission module increases, the laser emission module will generate more heat, which imposes higher requirements on the heat dissipation performance of the depth camera, and is not conducive to the long-time operation of the depth camera.

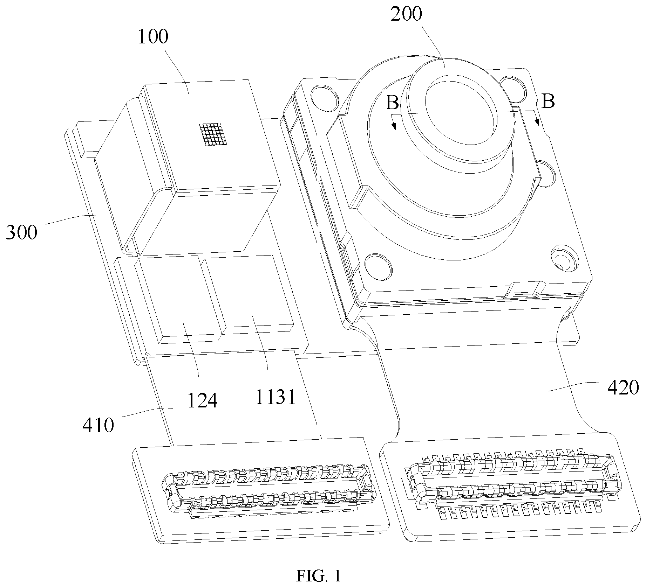

In order to solve the above technical problems, embodiments of the present disclosure provide a depth camera. FIG. 1 illustrates a structural schematic diagram of the depth camera. As shown in FIG. 1, the depth camera includes a laser emission module 100 and a laser receiver module 200, and the laser receiver module 200 and the laser emission module 100 are arranged side by side. The laser emission module 100 may also be referred as a laser emitter or a Laser transmitter. The laser emission module 100 can change the deflection angle of the laser beam, so the irradiation direction of the laser beam can be adjusted, which is equivalent to realizing the scanning of the laser beam within a certain angle, i.e., increasing the field of view of the laser beam.

The deflection angle is an angle between the direction of the adjusted laser beam and the direction of the laser beam before it passes through the phased array assembly 12. The deflection angle may be 0 degrees. In some embodiments, the deflection angle is 0 degrees when no control is applied to the phased array assembly 12.

In some embodiments, the direction of the laser beam emitted from the light outlet 11a is changed by the phased array assembly 12, i.e. the deflection angle of the laser beam emitted from the outlet 11a is changed.

In addition, wavefronts of the laser beams emitted from the laser emission module 100 form an equiphase surface, and the laser beams passing through the equiphase surface are always perpendicular to the equiphase surface by the laser emission module 100 provided by embodiments of present disclosure.

Moreover, since changing the deflection angle of the laser beam does not require increasing the optical power of the laser beam, the electric power of the laser emission module 100 will not increase, so there is no overheating problem, making the depth camera able to work for a long time. In addition, the power consumption of the depth camera will not increase and the power conversion efficiency will not decrease while the electric power remains unchanged, making the performance of the depth camera guaranteed.

It can be seen from the foregoing that the reason why the depth camera is able to increase the field of view of the laser beam without increasing the optical power of the laser beam is that the laser emission module 100 can change the deflection angle of the emitted laser beam. This is further described below.

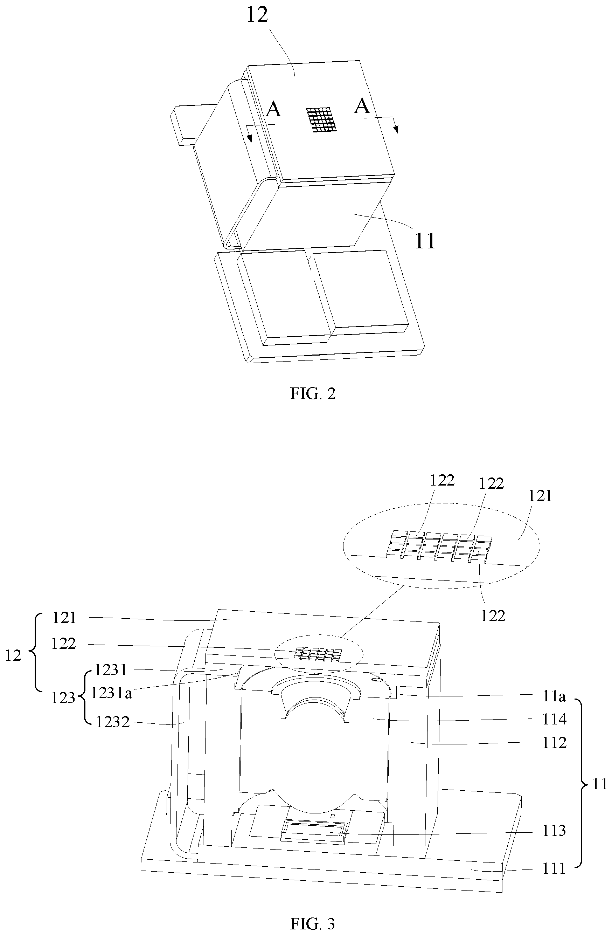

FIG. 2 illustrates a structural schematic diagram of a laser emission module 100. As shown in FIG. 2, the laser emission module 100 includes an emission assembly 11 and a phased array assembly 12.

FIG. 3 illustrates a cross-sectional view in the A-A direction of the laser emission module in FIG. 2. As shown in FIG. 3, the emission assembly 11 is provided with a light outlet 11a, and the light outlet 11a is configured to emit a laser beam. The phased array assembly 12 is located at the light outlet 11a and is configured to change a deflection angle of the laser beam emitted from the light outlet 11a.

In some embodiments, wavefronts of the laser beams emitted from the laser emission module 100 form an equiphase surface, and the laser beams passing through the equiphase surface are always perpendicular to the equiphase surface by the laser emission module 100 provided by embodiments of present disclosure.

When a laser beam is emitted by the laser emission module 100 provided by the embodiments of the present disclosure, the laser beam is emitted from the light outlet 11a of the emission assembly 11 and passes through the phased array assembly 12. As the laser beam passes through the phased array assembly 12, the irradiation direction of the laser beam can be adjusted by the phased array assembly 12 because the phased array assembly 12 can change its refractive index through an electro-optical effect or a thermo-optical effect, thereby changing the deflection angle of the laser beam, which is equivalent to achieving scanning of the laser beam within a certain angle, i.e., increasing the field of view of the laser beam.

In addition, since the laser emission module 100 provided by the embodiments of the present disclosure does not increase the optical power of the laser beam during the process of increasing the field of view of the laser beam, the electric power of the laser emission module 100 is not increase either, there is no problem of overheating and the laser emission module 100 can work for a long time.

It can be seen that the phased array assembly 12 plays a key role in increasing the field of view of the laser beam and will be further described below.

Referring again to FIG. 3, in this embodiment, the phased array assembly 12 may include a circuit board component 123, a transparent substrate 121 and a plurality of phase adjustment units 122.

The circuit board component 123 is located outside the light outlet 11a and is connected to the emission assembly 11. The transparent substrate 121 is located at the light outlet 11a and is perpendicular to the laser beam emitted from the light outlet 11a. The plurality of phase adjustment units 122 are all located on a side, away from the light outlet 11a, of the transparent substrate 121 and are arranged in an array. An orthographic projection of the array formed by the plurality of phase adjustment units 122 on a plane where the light outlet 11a is located, at least partially, overlaps with the light outlet 11a.

In above embodiment, the circuit board component 123 serves as a carrier for the transparent substrate 121 and the plurality of phase adjustment units 122, and provides electric energy to each phase adjustment unit 122 to enable the phase adjustment unit 122 to function properly. The transparent substrate 121 is configured to provide a carrier for each phase adjustment unit 122. The material of the phase adjustment unit 122 is characterized by an electro-optical effect and a thermo-optical effect. In the electro-optical effect, the refractive index of the phase adjustment unit 122 changes under the influence of an applied electric field. In the thermo-optical effect, the refractive index of the phase adjustment unit 122 changes under the influence of a change in temperature. By changing the refractive index of the phase adjustment unit 122, it is possible to produce phase differences between the laser beams passing through each phase adjustment unit 122, thus causing a phase delay. As a result, an interference occur between the laser beams, causing the laser beams in one direction to constructively interfere with each other, while the laser beams in other directions destructively interfere with each other, thus changing the deflection angle of the laser beams. In other words, by controlling the applied electric field or temperature of each unit involved, the deflection angle of the laser beam can be changed.

In some embodiments, one or more of the plurality of the phase adjustment units 122 are liquid crystal cells or optical waveguide units. The liquid crystal cell is characterized by the electro-optical effect, that is, the refractive index can be changed by changing the external electric field. The optical waveguide unit is characterized by the thermo-optical effect, that is, the refractive index can be changed by changing the temperature.

According to the preceding description, the orthographic projection of the array formed by the plurality of phase adjustment units 122 on the plane where the light outlet 11a is located at least partially overlaps with the light outlet 11a. That is, the orthographic projection of the array formed by the plurality of phase adjustment units 122 on the plane where the light outlet 11a is located may either cover the light outlet 11a or be covered by the light outlet 11a.

In some embodiments, the orthographic projection of each phase adjustment unit 122 on the plane where the light outlet 11a is located within the light outlet 11a. In this way, the phase adjustment unit 122 is prevented from being blocked by the light outlet 11a.

In other embodiments, the light outlet 11a is located within the orthographic projection of the array formed by the plurality of phase adjustment units 122 in the plane where the light outlet 11a is located. In this way, the laser beam can be prevented from overflowing the processing range of the phase adjustment units 122.

In order to control each phase adjustment unit 122, in this embodiment, the circuit board component 123 includes a first circuit board 1231 and a second circuit board 1232.

The first circuit board 1231 is sandwiched between the transparent substrate 121 and the light outlet 11a, a middle part of the first circuit board 1231 is provided with a light transmission hole 1231a, and the light transmission hole 1231a is opposite to the light outlet 11a. One end of the second circuit board 1232 is connected to the first circuit board 1231, and the other end of the second circuit board 1232 is connected to the emission assembly 11.

In the above embodiment, the first circuit board 1231 is configured to carry the transparent substrate 121 and provide power for each phase adjustment unit 122. The first circuit board 1231 can be connected to the emission assembly 11 by connecting the second circuit board 1232, and then the first circuit board 1231 can be used to provide power to the emission assembly 11, making the laser emission module 100 more compact and conducive to the miniaturization of the depth camera.

In some embodiments, the first circuit board 1231 may be a printed circuit board, and the second circuit board 1232 may be a flexible circuit board. In this way, the structural strength of the printed circuit board can be used to carry the transparent substrate 121 more stably, and the flexible characteristics of the flexible circuit board can be used to facilitate the connection between the first circuit board 1231 and the emission assembly 11.

Of course, in other embodiments, the circuit board component 123 may also include only one circuit board, and the circuit board can not only carry the transparent substrate 121, but also can be connected to the emission assembly 11. In this case, the circuit board component 123 is a flexible circuit board to facilitate shaping.

In some embodiments, the second circuit board 1232 is located on the outside of the emission assembly 11, so as to prevent the second circuit board 1232 from affecting the normal operation of the emission assembly 11.

How the phased array assembly 12 deflects the laser beam has been introduced in the preceding description, and the emission assembly 11 will be introduced below.

Referring further to FIG. 3, the emission assembly 11 includes a third circuit board 111, a frame 112, and a laser chip 113.

One end of the frame 112 is connected to a surface of the third circuit board 111, the other end of the frame 11 is provided with the light outlet 11a. The laser chip 113 is located in the frame 112 and is connected to the surface of the third circuit board 111.

In the above embodiment, the third circuit board 111 is configured to carry the frame 112 and the laser chip 113, and to supply power to the laser chip 113. The frame 112 is hollow inside and is configured to accommodate the laser chip 113. The laser chip 113 is configured to emit a laser beam so that the laser beam penetrates the inner space of the frame 112 and is emitted by the light outlet 11a.

In some embodiments, the third circuit board 111 may be a printed circuit board. In this way, the stronger structural strength of the printed circuit board can be used to carry the frame 112 and the laser chip 113 more stably.

In some embodiments, the laser chip 113 may be a Vertical-Cavity Surface-Emitting Laser (VCSEL). The laser chip 113 may include a substrate and a chip body, one surface of the substrate is connected to the third circuit board 111, and the other surface of the substrate is connected to the chip body.

In some embodiments, both a laser chip driver 1131 and the phased array assembly driver 124 are connected to the third circuit board 111 and are located on the same side of a holder 22 of the laser receiver module 200. In this way, the laser emission module 100 can be made more compact, which is conducive to the miniaturization of the depth camera.

In order to ensure the laser beams emitted from the light outlet 11a are collimated laser beams, the emission assembly 11 further includes a collimating lens 114. The collimator lens 114 is located between the light outlet 11a and the laser chip 113 and is connected to an inner wall of the frame 112. In this way, the laser beams are collimated by the collimating lens 114 before being emitted from the light outlet 11a, so that the laser beams emitted from the light outlet 11a are all collimated laser beams, which enables better control of the interference of the laser beams.

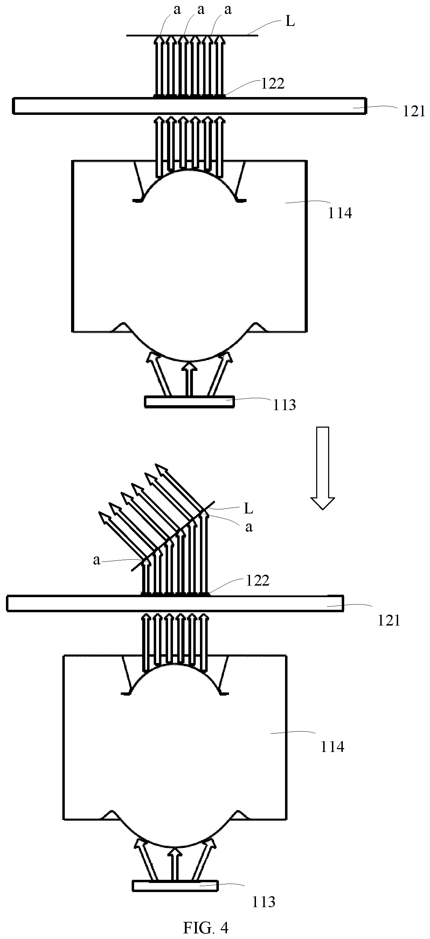

FIG. 4 illustrates a schematic diagram of optical paths of laser beams. The operating process of the laser emission module 100 is introduced below in conjunction with FIG. 4.

The laser chip 113 emits laser beams. The laser beams transmit through the collimating lens 114, and are collimated into collimated laser beams under the action of the collimating lens 114. The collimated laser beams are emitted from the light outlet 11a, and sequentially transmits through the transparent substrate 121 and each phase adjustment unit 122. If no control is applied to each phase adjustment unit 122 during the transmission of the collimated laser beams through the phase adjustment units 122, the laser beams continue to propagate in the original direction as shown in upper part of FIG. 4, where an equiphase surface L formed by the wavefronts a of the laser beams is perpendicular to the laser beams before passing through the phase adjustment units 122. If the control is applied to each phase adjustment unit 122 and the refractive index of the phase adjustment unit 122 is changed, then phase differences occur between the laser beams passing through each phase adjustment unit 122, thereby causing a phase delay. The equiphase surface L formed by the wavefront a of the laser beams is tilted towards the laser beams before passing through the phase adjustment units 122. Due to the phase differences between the laser beams, there will be interference between the laser beams, resulting in deflection as shown in lower part of FIG. 4.

It should be noted that in order to achieve steady-state interference of laser beams, the following three conditions needs to be met: the frequencies of the laser beams are the same, the vibration components of laser beams are parallel to each other, and the phase difference between any adjacent laser beams is constant. Since laser beams are emitted from the same laser chip 113 and collimated by the collimating lens 114, the above-mentioned first and second conditions are met, it is only necessary to ensure that the phase difference between any adjacent laser beams is constant. For example, the phase difference between the first laser beam and the second laser beam is $\Delta\phi$, the phase difference between the second laser beam and the third laser beam is $2\Delta\phi$, the phase difference between the third laser beam and the fourth laser is $3\Delta\phi$, and so on. Thus, laser beams that satisfy the equiphase relation constructively interfere with each other and those that do not satisfy the equiphase relation destructively interfere with each other, so that the laser beam passing through the equiphase surface L is always perpendicular to the equiphasic plane L.

The angle of inclination of the equiphase surface L is calculated as follows.

The following equation can be obtained from the geometric relationship.

$$\Delta d = d \cdot \sin\theta. \qquad (1)$$

Here, $\Delta d$ denotes the difference in optical path between two adjacent laser beams to the equiphase plane; $d$ denotes the distance between the two adjacent laser beams; $\theta$ denotes the angle of inclination between the equiphase plane and the laser beams before passing through phase adjustment unit 122.

In the interference light field, the light intensity distribution at the midpoint satisfies the following equation.

$$I = I_1 + I_2 + 2\sqrt{I_1 I_2}\, \cos\Delta\varphi \;. \tag{2}$$

Here, $I$ denotes the light intensity at the midpoint in optical interference space, $I_1$ denotes the light intensity of the laser beam 1 at the midpoint position, $I_2$ denotes the light intensity of the laser beam 2 at the midpoint position, and $\Delta\varphi$ denotes the phase difference between the two laser beams at the midpoint position.

In the interference light field, the phase difference between adjacent laser beams at the midpoint position satisfies the following equation.

$$\Delta\varphi = \frac{2\pi}{\lambda_0}\left(n_2 d_2 - n_1 d_1\right) = \frac{2\pi}{\lambda_0}\Delta d \;. \tag{3}$$

Here, $n_1$ and $n_2$ denote the refractive indices of the laser beam 1 and the laser beam 2 passing through the propagation medium, respectively; $d_1$ and $d_2$ denote the lengths of the laser beam 1 and the laser beam 2 through the propagation path, respectively; and $\lambda_0$ denotes the wavelength of the laser beam.

According to the equations (1) and (3), the following equation can be obtained.

$$\theta = \arcsin\left(\frac{\lambda_0 \Delta\varphi}{2\pi d}\right). \tag{4}$$

It can be seen that under the condition that the phase difference between any adjacent laser beams is kept constant, the angle of inclination of the equiphase surface L can be determined, and thus the deflection angle of the laser beam can be determined.

The laser receiver module 200 is described below.

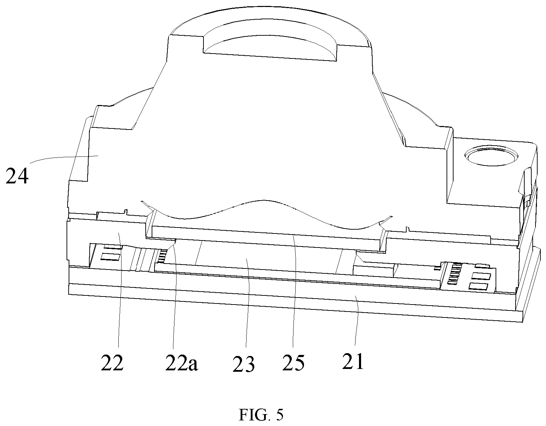

FIG. 5 illustrates a cross-sectional view in the B-B direction of the depth camera in FIG. 1. As shown in FIG. 5, in this embodiment, the laser receiver module 200 may include a fourth circuit board 21, a holder 22 and a sensor chip 23.

The holder 22 is connected to a surface of the fourth circuit board 21 and is provided with a light inlet 22a, and the light inlet 22a is located at a side, facing away from the fourth circuit board 21, of the holder 22. The sensor chip 23 is located inside the holder 22, connected to the surface of the fourth circuit board 21, and opposite to the light inlet 22a.

In the above embodiment, the fourth circuit board 21 is configured to carry the holder 22 and the sensor chip 23, and supply power to the sensor chip 23. The sensor chip 23 is configured to receive the laser beam entering through the light inlet 22a to calculate the depth of field distance. The holder 22 is arranged outside the sensor chip 23 to support other components and to protect the sensor chip 23.

In some embodiments, the fourth circuit board 21 may be a printed circuit board. In this way, the stronger structural strength of the printed circuit board can be used to carry the holder 22 and the sensor chip 23 more stably.

In some embodiments, the laser receiver module 200 may further include a receiving lens 24 and a narrow-band filter 25.

The receiving lens 24 is located at the light inlet 22a and is connected to the holder 22. The narrow-band filter 25 is located at the light inlet 22a and is sandwiched between the receiving lens 24 and the holder 22.

The receiving lens 24 is configured to converge the reflected laser beams, so that the laser beams can pass through the narrow-band filter 25, enter the holder 22 from the light inlet 22a after filtering, and be sensed by the sensor chip 23.

Referring again to FIG. 1, in this embodiment, the depth camera may further include a reinforcement plate 300, and the laser emission module 100 and the laser receiver module 200 are connected to a same surface of the reinforcement plate 300.

In the above embodiment, the reinforcement plate 300 is configured to reinforce the third circuit board 111 and the fourth circuit board 21, thereby improving the structural strength of the third circuit board 111 and the fourth circuit board 21, and improving the structural strength of the depth camera.

In some embodiments, the laser emission module 100 and the laser receiver module 200 are extended with a first flexible circuit board 410 and a second flexible circuit board 420, respectively, to connect the connectors of the depth camera, thus facilitating the connection with other components within the depth camera.

In some embodiments, the first flexible circuit board 410 extended from the laser emission module 100 is connected to the third circuit board 111, and the second flexible circuit board 420 extended from the laser receiver module 200 is connected to the fourth circuit board 21. In addition, the first flexible circuit board 410 extended from the laser emission module 100 and the second flexible circuit board 420 extended from the laser receiver module 200 are located on the same side. In this way, a more compact design is possible, facilitating the miniaturization of depth cameras.

The depth camera provided by the embodiments of the present disclosure can meet the requirements for large deflection angle, high scanning rate, high pointing accuracy, low loss, low power consumption, and high stability through the configured laser emission module. In addition, when emitting a laser beam through the laser emission module, it is possible to direct a laser beam randomly over a large field of view and, in small increments, to deflect that laser beam from one angle to another and to stay on the target object for the required time.

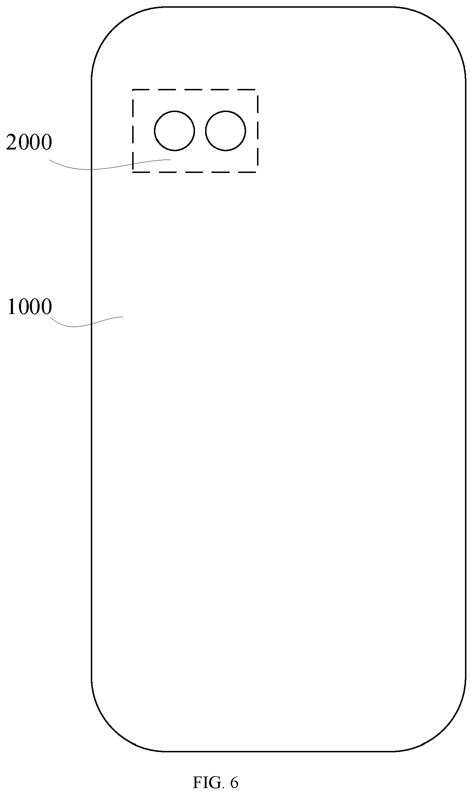

FIG. 6 illustrates a structural schematic diagram of an electronic device provided by embodiments of the present disclosure. The electronic device may be a mobile phone, a tablet computer, or the like. Referring to FIG. 6, the electronic device includes a housing 1000 and a depth camera 2000.

The depth camera 2000 is the depth camera shown in FIGS. 1-5, and the depth camera 2000 is located in the housing 1000.

As the electronic device includes the depth camera shown in FIGS. 1-5, all the beneficial effects of the depth camera can be achieved and will not be repeated herein.

## Claims

1. A laser emission module, comprising: an emission assembly (11) and a phased array assembly (12); wherein

   the emission assembly (11) has a light outlet (11a), and the light outlet (11a) is configured to emit a laser beam; and
   the phased array assembly (12) is located at the light outlet (11a) and is configured to change a direction of the laser beam emitted from the light outlet (11a); and
   the laser emission module **characterized in that** the emission assembly (11) further comprises a third circuit board (111), a frame (112),
   a laser chip (113), and a collimating lens (114);
   one end of the frame (112) is connected to a surface of the third circuit board (111), and the other end of the frame has the light outlet (11a);
   the laser chip (113) is located in the frame (112) and is connected to the surface of the third circuit board (111); and
   the collimating lens (114) is located between the light outlet (11a) and the laser chip (113) and is connected to an inner wall of the frame (112).

2. The laser emission module of claim 1, wherein the phased array assembly (12) comprises a circuit board component (123), a transparent substrate (121) and more than one phase adjustment unit (122);

   the circuit board component (123) is located outside the light outlet (11a) and is connected to the emission assembly (11);
   the transparent substrate (121) is located at the light outlet (11a) and is perpendicular to the laser beam emitted from the light outlet (11a); and
   the more than one phase adjustment unit (122) is located on a side, away from the light outlet (11a), of the transparent substrate (121) and is arranged in an array, and
   an orthographic projection of the array formed by the more than one phase adjustment unit (122) on a plane where the light outlet (11a) is located, at least partially, overlaps with the light outlet (11a).

3. The laser emission module of claim 2, wherein a material of the more than one phase adjustment unit (122) has an electro-optical effect and/or a thermo-optical effect.

4. The laser emission module of any one of claims 2-3, wherein the more than one phase adjustment unit (122) is a liquid crystal cell or an optical waveguide unit.

5. The laser emission module of any one of claims 2-4, wherein the circuit board component (123) comprises a first circuit board (1231) and a second circuit board (1232);

   the first circuit board (1231) is sandwiched between the transparent substrate (121) and the light outlet (11a), a middle part of the first circuit board (1231) has a light transmission hole (1231a), and the light transmission hole (1231a) is opposite to the light outlet (11a); and
   one end of the second circuit board (1232) is connected to the first circuit board (1231), and the other end of the second circuit board (1232) is connected to the emission assembly (11).

6. The laser emission module of any one of claims 1-5, wherein when multiple laser beams are emitted from the light outlet (11a), the multiple laser beams satisfy following conditions:

frequencies of the multiple laser beams are identical;
vibration components of the multiple laser beams are parallel to each other; and
phase difference between any adjacent laser beams in the multiple laser beams is constant.

7. The laser emission module of any one of claims 1-6, wherein when multiple laser beams are emitted from the light outlet (11a), an equiphase surface (L) is formed by wavefronts (a) of the multiple laser beams, and the multiple laser beams passing through the equiphase surface (L) are perpendicular to the equiphase surface (L).

8. A depth camera, comprising a laser emission module (100) and a laser receiver module (200); wherein

the laser emission module (100) is the laser emission module according to any one of claims 1-7; and
the laser receiver module (200) is arranged side by side with the laser emission module (100).

9. The depth camera of claim 8, wherein the laser receiver module (200) comprises a fourth circuit board (21), a holder (22) and a sensor chip (23);

the holder (22) is connected to a surface of the fourth circuit board (21) and is provided with a light inlet (22a), and the light inlet (22a) is located at a side, facing away from the fourth circuit board (21), of the holder (22); and
the sensor chip (23) is located inside the holder (22), connected to the surface of the fourth circuit board (21), and opposite to the light inlet (22a).

10. The depth camera of claim 9, wherein the laser receiver module (200) further comprises a receiving lens (24) and a narrow-band filter (25);

the receiving lens (24) is located at the light inlet (22a) and is connected to the holder (22); and
the narrow-band filter (25) is located at the light inlet (22a) and is sandwiched between the receiving lens (24) and the holder (22).

11. The depth camera of any one of claims 8-10, wherein the depth camera further comprises a reinforcement plate (300); the laser emission module (100) and the laser receiver module (200) are connected to a same surface of the reinforcement plate.

12. The depth camera of any one of claims 9-11, wherein the laser emission module (100) and the laser receiver module (200) are extended with a first flexible circuit board (410) and a second flexible circuit board (420), respectively, to connect connectors of the depth camera, and the connectors are configured to connect components within the depth camera;
preferably, the first flexible circuit board (410) extended from the laser emission module (100) and the second flexible circuit board (420) extended from the laser receiver module (200) are located on a same side.

13. An electronic device, comprising a housing (1000) and a depth camera (2000); wherein
the depth camera (2000) is the depth camera according to any one of claims 8-12 and is located in the housing (1000).

**Patentansprüche**

1. Ein Laseremissionsmodul umfassend: eine Emissionsanordnung (11) und eine Phased-Array-Anordnung (12); wobei

die Emissionsanordnung (11) einen Lichtaustritt (11a) aufweist und der Lichtaustritt (11a) dazu konfiguriert ist, einen Laserstrahl zu emittieren; und
die Phased-Array-Anordnung (12) sich am Lichtaustritt (11a) befindet und dazu konfiguriert ist, die Richtung des vom Lichtaustritt (11a) emittierten Laserstrahls phasenverschoben zu ändern; und
in dem das Laseremissionsmodul **dadurch gekennzeichnet ist, dass** die Emissionsanordnung (11) ferner eine dritte Leiterplatte (111), einen Rahmen (112), einen Laserchip (113) und eine Kollimatorlinse (114) umfasst;
ein Ende des Rahmens (112) mit einer Oberfläche der dritten Leiterplatte (111) verbunden ist und das andere Ende des Rahmens den Lichtaustritt (11a) aufweist;

der Laserchip (113) befindet sich in dem Rahmen (112) und ist mit der Oberfläche der dritten Leiterplatte (111) verbunden; und

die Kollimatorlinse (114) befindet sich zwischen dem Lichtaustritt (11a) und dem Laserchip (113) und ist mit einer Innenwand des Rahmens (112) verbunden.

2. Laseremissionsmodul nach Anspruch 1, wobei die Phased-Array-Anordnung (12) eine Leiterplattenkomponente (123), ein transparentes Substrat (121) und mehr als eine Phasenanpassungseinheit (122) umfasst;

die Leiterplattenkomponente (123) außerhalb des Lichtaustritts (11a) angeordnet und mit der Emissionsanordnung (11) verbunden ist;

das transparente Substrat (121) sich an einer Stelle befindet, die vom Lichtaustritt (11a) beabstandet ist, und senkrecht zu dem vom Lichtaustritt (11a) emittierten Laserstrahl steht; und

die mehr als eine Phasenanpassungseinheit (122) sich auf einer von der Lichtaustrittsöffnung (11a) abgewandten Seite des transparenten Substrats (121) befindet und ist in einem Array angeordnet, und

eine orthogonale Projektion des durch die mehr als eine Phasenanpassungseinheit (122) gebildeten Arrays auf eine Ebene, auf der sich der Lichtaustritt (11a) befindet, zumindest teilweise mit dem Lichtaustritt (11a) überlappt.

3. Laseremissionsmodul nach Anspruch 2, wobei ein Material der mehr als einen Phasenanpassungseinheit (122) einen elektrooptischen Effekt und/oder einen thermooptischen Effekt aufweist.

4. Laseremissionsmodul nach einem der Ansprüche 2 bis 3, wobei die mehr als eine Phasenanpassungseinheit (122) eine Flüssigkristallzelle oder eine optische Wellenleitereinheit ist.

5. Laseremissionsmodul nach einem der Ansprüche 2 bis 4, wobei die Leiterplattenkomponente (123) eine erste Leiterplatte (1231) und eine zweite Leiterplatte (1232) umfasst.

die erste Leiterplatte (1231) zwischen dem transparenten Substrat (121) und dem Lichtaustritt (11a) angeordnet ist, ein mittlerer Teil der ersten Leiterplatte (1231) eine Lichtdurchlassöffnung (1231a) aufweist und die Lichtdurchlassöffnung (1231a) dem Lichtaustritt (11a) gegenüberliegt; und

ein Ende der zweiten Leiterplatte (1232) mit der ersten Leiterplatte (1231) verbunden ist und das andere Ende der zweiten Leiterplatte (1232) mit der Emissionsanordnung (11) verbunden ist.

6. Laseremissionsmodul nach einem der Ansprüche 1 bis 5, wobei, wenn mehrere Laserstrahlen aus dem Lichtaustritt (11a) emittiert werden, die mehreren Laserstrahlen die folgenden Bedingungen erfüllen:

die Frequenzen der mehreren Laserstrahlen identisch sind;

die Schwingungskomponenten der mehreren Laserstrahlen parallel zueinander sind; und

die Phasendifferenz zwischen beliebigen benachbarten Laserstrahlen in den mehreren Laserstrahlen konstant ist.

7. Laseremissionsmodul nach einem der Ansprüche 1 bis 6, wobei, wenn mehrere Laserstrahlen aus dem Lichtaustritt (11a) emittiert werden, durch die Wellenfronten (a) der mehreren Laserstrahlen eine gleichphasige Fläche (L) gebildet wird und die durch die gleichphasige Fläche (L) hindurchtretenden mehreren Laserstrahlen senkrecht zur gleichphasigen Fläche (L) stehen.

8. Tiefenkamera, umfassend ein Laseremissionsmodul (100) und ein Laserempfangsmodul (200); wobei

das Laseremissionsmodul (100) das Laseremissionsmodul gemäß einem der Ansprüche 1 bis 7 ist; und

das Laserempfangsmodul (200) nebeneinander mit dem Laseremissionsmodul (100) angeordnet ist.

9. Tiefenkamera nach Anspruch 8, wobei das Laserempfangsmodul (200) eine vierte Leiterplatte (21), eine Halterung (22) und einen Sensorchip (23) umfasst;

der Halter (22) mit einer Oberfläche der vierten Leiterplatte (21) verbunden ist und mit einem Lichteinlass (22a) versehen ist, und der Lichteinlass (22a) an einer von der vierten Leiterplatte (21) abgewandten Seite des Halters (22) angeordnet ist; und

der Sensorchip (23) sich im Inneren des Halters (22) befindet, mit der Oberfläche der vierten Leiterplatte (21) verbunden ist und dem Lichteinlass (22a) gegenüber liegt.

**10.** Tiefenkamera nach Anspruch 9, wobei das Laserempfangsmodul (200) ferner eine Empfangslinse (24) und einen Schmalbandfilter (25) umfasst;

die Empfangslinse (24) am Lichteintritt (22a) angeordnet und mit dem Halter (22) verbunden ist; und
das Schmalbandfilter (25) am Lichteintritt (22a) angeordnet ist und zwischen der Empfangslinse (24) und dem Halter (22) angeordnet ist.

**11.** Tiefenkamera nach einem der Ansprüche 8 bis 10, wobei die Tiefenkamera ferner eine Verstärkungsplatte (300) umfasst;
das Laseremissionsmodul (100) und das Laserempfangsmodul (200) mit derselben Oberfläche der Verstärkungsplatte verbunden sind.

**12.** Tiefenkamera nach einem der Ansprüche 9 bis 11, wobei das Laseremissionsmodul (100) und das Laserempfangsmodul (200) jeweils mit einer ersten flexiblen Leiterplatte (410) und einer zweiten flexiblen Leiterplatte (420) verlängert sind, um Anschlüsse der Tiefenkamera zu verbinden, und die Anschlüsse dazu konfiguriert sind, Komponenten innerhalb der Tiefenkamera zu verbinden;
vorzugsweise sich die erste flexible Leiterplatte (410), die vom Laseremissionsmodul (100) ausgeht, und die zweite flexible Leiterplatte (420), die vom Laserempfangsmodul (200) ausgeht, auf derselben Seite befinden.

**13.** Elektronisches Gerät, umfassend ein Gehäuse (1000) und eine Tiefenkamera (2000); wobei
die Tiefenkamera (2000) die Tiefenkamera gemäß einem der Ansprüche 8 bis 12 ist und sich in dem Gehäuse (1000) befindet.

**Revendications**

**1.** Module d'émission laser à, comprenant: un ensemble d'émission (11) et un ensemble à réseau phasé (12); dans lequel

l'ensemble d' d'émission (11) comporte une sortie de lumière (11a), et la sortie de lumière (11a) est configurée pour émettre un faisceau laser; et
l' de réseau phasé (12) a pour site la sortie de lumière (11a) et est configuré pour modifier de maniè e la direction du faisceau laser émis par la sortie de lumière (11a); et
le module d'émission laser étant **caractérisé en ce que** l'ensemble d'émission (11) comprend en outre une troisième carte de circuit imprimé (111), un châssis (112), une puce laser (113) et une lentille de collimation (114);
une extrémité du châssis (112) est reliée à une surface de la troisième carte de circuit imprimé (111), et l'autre extrémité du châssis comporte la sortie de lumière (11a);
la puce laser (113) est située dans le châssis (112) et est reliée à la surface de la troisième carte de circuit imprimé (111); et
la lentille de collimation (114) est située entre la sortie de lumière (11a) et la puce laser (113) et est reliée à une paroi interne du cadre (112).

**2.** Module d'émission laser selon la revendication 1, dans lequel l'ensemble de réseau en phase (12) comprend un composant de carte de circuit imprimé (123), un substrat transparent (121) et plus d'une unité d'ajustement de phase (122);

le composant de carte de circuit imprimé (123) a un site à l'extérieur de la sortie de lumière (11a) et est relié à l'ensemble d'émission (11);
le substrat transparent (121) a un site à l' e la sortie de lumière (11a) et est perpendiculaire au faisceau laser émis par la sortie de lumière (11a); et
les plusieurs unités de réglage de phase (122) sont situées sur un côté du substrat transparent (121), à l'opposé de la sortie de lumière (11a), et sont disposées en réseau, et
une projection orthographique du réseau formé par les différentes unités d'ajustement de phase (122) sur un plan où la sortie de lumière (11a) a un site, qui recouvre au moins partiellement ladite sortie de lumière (11a).

**3.** Module d'émission laser selon la revendication 2, dans lequel un matériau de la ou des unités d'ajustement de phase (122) présente un effet électro-optique et/ou un effet thermo-optique.

4. Module d'émission laser selon l'une quelconque des revendications 2 à 3, dans lequel la ou les unités d'ajustement de phase (122) sont une cellule à cristaux liquides ou une unité de guide d'onde optique.

5. Module d'émission laser selon l'une quelconque des revendications 2 à 4, dans lequel le composant de carte de circuit imprimé (123) comprend une première carte de circuit imprimé (1231) et une deuxième carte de circuit imprimé (1232);

la première carte de circuit imprimé (1231) est prise en sandwich entre le substrat transparent (121) et la sortie de lumière (11a), une partie centrale de la première carte de circuit imprimé (1231) comporte un trou de transmission de lumière (1231a), et le trou de transmission de lumière (1231a) est situé en face de la sortie de lumière (11a); et une extrémité de la deuxième carte de circuit imprimé (1232) est connectée à la première carte de circuit imprimé (1231), et l'autre extrémité de la deuxième carte de circuit imprimé (1232) est connectée à l'ensemble d'émission (11).

6. Module d'émission laser selon l'une quelconque des revendications 1 à 5, dans lequel, lorsque plusieurs faisceaux laser sont émis depuis la sortie de lumière (11a), lesdits faisceaux laser satisfont aux conditions suivantes :

les fréquences des multiples faisceaux laser sont identiques;
les composantes de vibration des multiples faisceaux laser sont parallèles les unes aux autres ; et
la différence de phase entre deux faisceaux laser adjacents parmi les multiples faisceaux laser est constante.

7. Module d'émission laser selon l'une quelconque des revendications 1 à 6, dans lequel, lorsque plusieurs faisceaux laser sont émis depuis la sortie de lumière (11a), une surface d'équiphase (L) est formée par les fronts d'onde (a) desdits faisceaux laser, et les faisceaux laser multiples traversant la surface d'équiphase (L) sont perpendiculaires à ladite surface d'équiphase (L).

8. Caméra de profondeur, comprenant un module d'émission laser (100) et un module de réception laser (200); dans lequel

le module d'émission d' s laser (100) est le module d'émission laser selon l'une quelconque des revendications 1 à 7; et
le module de réception laser (200) est disposé côte à côte avec le module d'émission laser (100).

9. Caméra de profondeur selon la revendication 8, dans lequel le module de réception laser (200) comprend une quatrième carte de circuit imprimé (21), un support (22) et une puce de capteur (23);

le support (22) est relié à une surface de la quatrième carte de circuit imprimé (21) et prévoit une entrée de lumière (22a), et l'entrée de lumière (22a) est située sur un côté du support (22) opposé à la quatrième carte de circuit imprimé (21); et
la puce de capteur (23) est située à l'intérieur du support (22), reliée à la surface de la quatrième carte de circuit imprimé (21) et en face de l'entrée de lumière (22a).

10. Caméra de profondeur selon la revendication 9, dans laquelle le module récepteur laser (200) comprend en outre une lentille de réception (24) et un filtre à bande étroite (25);

la lentille de réception (24) est située au niveau de l'entrée de lumière (22a) et est reliée au support (22); et
le filtre à bande étroite (25) est situé au niveau de l'entrée de lumière (22a) et est pris en sandwich entre la lentille de réception (24) et le support (22).

11. Caméra de profondeur selon l'une quelconque des revendications 8 à 10, dans lequel la caméra de profondeur comprend en outre une plaque de renfort (300);
le module d'émission laser (100) et le module de réception laser (200) sont reliés à une même face de la plaque de renfort.

12. Caméra de profondeur selon l'une quelconque des revendications 9 à 11, dans lequel le module d'émission laser (100) et le module de réception laser (200) sont prolongés respectivement par une première carte de circuit imprimé flexible (410) et une deuxième carte de circuit imprimé flexible (420) afin de relier les connecteurs de la caméra de profondeur, et les connecteurs sont configurés pour relier des composants à l'intérieur de la caméra de profondeur;

de préférence, la première carte de circuit imprimé flexible (410) s'étendant à partir du module d'émission laser (100) et la deuxième carte de circuit imprimé flexible (420) s'étendant à partir du module de réception laser (200) sont situées sur un même côté.

13. Dispositif électronique, comprenant un boîtier (1000) et une caméra de profondeur (2000) ; dans lequel la caméra de profondeur (2000) est la caméra de profondeur selon l'une quelconque des revendications 8 à 12 et a pour site le boîtier (1000).

FIG. 1

FIG. 2

FIG. 3

FIG. 4

24

22 22a 23 25 21

FIG. 5

2000

1000

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021041691 A1
- WO 2020071885 A1
- US 2020003870 A1